# FASCICULE DE BREVET EUROPEEN

(11) **EP 4 113 900 B1**
(45) Date de publication et mention de la délivrance du brevet: **01.04.2026**
(21) Numéro de dépôt: 22180777.9
(22) Date de dépôt: 23.06.2022
(51) Int. Cl.: H04L 9/40

(54) **PROCEDE ET DISPOSITIF DE SECURISATION D'UN RESEAU LOCAL COMPRENANT UN COMMUTATEUR RESEAU AUQUEL EST RELIEE UNE STATION PAR LIAISON FILAIRE**
VERFAHREN UND VORRICHTUNG ZUR SICHERUNG EINES LOKALEN NETZWERKS, DAS MIT EINEM NETZWERKSCHALTER AUSGESTATTET IST, AN DEN EINE STATION PER KABELVERBINDUNG ANGESCHLOSSEN IST
METHOD AND DEVICE FOR SECURING A LOCAL NETWORK COMPRISING A NETWORK SWITCH TO WHICH A STATION IS CONNECTED BY A WIRED LINK

(30) Priorité: 28.06.2021 FR 2106933
(43) Date de publication de la demande: 04.01.2023
(73) Titulaire: Sagemcom Broadband SAS, 92270 Bois-Colombes (FR)
(72) Inventeur: ALARCON, Laurent, 92500 RUEIL MALMAISON (FR); LE ROUX, Sylvain, 92500 RUEIL MALMAISON (FR)
(74) Mandataire: Cabinet Le Guen Maillet

(56) Documents cités:
- FR-A1- 3 100 408
- FR-A1- 3 102 332
- FR-A1- 3 105 701

## Description

### DOMAINE TECHNIQUE

La présente invention concerne un procédé et un dispositif de sécurisation d'un réseau local comprenant des nœuds permettant une extension de couverture de communication sans fil afin d'augmenter la portée du réseau local en coordonnant plusieurs points d'accès intégrés aux nœuds

### ETAT DE LA TECHNIQUE ANTERIEURE

Dans les réseaux locaux LAN (« Local Area Network » en anglais), des systèmes d'extension de couverture de communication sans fil peuvent être utilisés afin d'augmenter la portée de ces réseaux locaux LAN en coordonnant plusieurs points d'accès AP (« Access Point » en anglais) répartis. Ces différents points d'accès AP sont intégrés à des nœuds de communication, appelés simplement ci-après nœuds, interconnectés grâce à un sous-réseau d'acheminement ou d'amenée (« backhaul subnetwork » en anglais) et mettent tous à disposition un même réseau local sans fil WLAN (« Wireless Local Area Network » en anglais.

Les nœuds du sous-réseau d'acheminement sont connectés les uns aux autres grâce à une structure en forme d'arbre, un nœud pouvant alors servir de relais entre deux autres nœuds du sous-réseau d'acheminement. Les nœuds du sous-réseau d'acheminement sont ainsi interconnectés grâce à des liaisons filaires, par exemple de type Ethernet, ou à des liaisons sans fil. Les nœuds du sous-réseau d'acheminement sont connectés entre eux par un réseau qu'on appelle aussi « Réseau BackHaul » pouvant être soit filaire, soit sans fil, ou une combinaison des deux.

Chaque nœud du sous-réseau d'acheminement émet au moins un réseau sans fil qu'on appelle « Réseau FrontHaul » ou réseau frontal sur lequel se connectent les stations de l'utilisateur. Ce réseau frontal s'il utilise la technologie Wi-Fi / IEEE 802.11 est l'équivalent de ce qui se nomme BSS (Basic Service Set).

Au moins un des nœuds du sous-réseau d'acheminement est connecté à une passerelle résidentielle « gateway en anglais » qui fournit l'accès au réseau Internet. La passerelle résidentielle peut aussi faire partir du sous-réseau d'acheminement.

La technologie Wi-Fi assure nativement la sécurité des données échangées en utilisant une technologie de cryptage. Un secret partagé par deux nœuds du sous-réseau d'acheminement permet, au moment de l'association Wi-Fi d'une station, de sécuriser les données dès la connexion de la station au réseau sans fil.

Il n'en est pas de même lorsqu'une station se connecte au sous-réseau d'acheminement par l'intermédiaire d'un commutateur de réseau à l'aide d'une liaison filaire.

La sécurisation de la connexion de la station à l'aide d'une liaison filaire doit être réalisée par une couche réseau supérieure. La connexion est initialement établie sans cryptage et les équipements connectés peuvent s'ils le désirent établir une connexion sécurisée en utilisant par exemple le protocole SSL ou en créant un réseau privé virtuel (Virtual Private Network en anglais).

Actuellement, les connexions sous-réseau d'acheminement en Ethernet ne sont en général pas sécurisées et l'utilisation d'un commutateur réseau dans le réseau local crée des problèmes de sécurité. En effet, si le sous-réseau d'acheminement n'est pas chiffré, le commutateur réseau permet d'espionner tout le trafic du sous-réseau d'acheminement et si le sous-réseau d'acheminement est chiffré, il ne permettrait plus la connexion d'une station au réseau local.

La demande de brevet FR 3102 332 divulgue un procédé de connexion d'un nœud de communication et nœud de communication.

La demande de brevet FR3100408 divulgue un procédé de configuration d'un système d'extension de couverture de communication sans-fil.

La demande de brevet FR3105701 divulgue un procédé d'extinction d'un réseau de communication comportant plusieurs points d'accès.

La présente invention proposée permet de remédier au problème de sécurité lié à l'utilisation d'un commutateur de réseau connecté au sous-réseau d'acheminement par l'intermédiaire d'une liaison filaire de type Ethernet.

### EXPOSE DE L'INVENTION

A cette fin, selon un premier aspect, l'invention propose un procédé de sécurisation d'un réseau local comprenant des nœuds permettant une extension de couverture de communication sans fil afin d'augmenter la portée du réseau local en coordonnant plusieurs points d'accès intégrés aux nœuds, les nœuds étant interconnectés grâce à un sous-réseau d'acheminement, chaque nœud du sous-réseau d'acheminement émettant au moins un réseau sans fil appelé réseau frontal, caractérisé en ce que le procédé comporte les étapes de :
détection de la connexion d'une station par l'intermédiaire d'une liaison filaire à un commutateur de réseau, ledit commutateur de réseau étant relié au sous-réseau d'acheminement par une liaison filaire,
établissement de connexions sécurisées entre chaque nœud si la connexion de la station par l'intermédiaire d'une liaison filaire au commutateur de réseau est détectée,
gestion des nœuds du réseau reliés au commutateur de réseau avec des règles de filtrage appliquées aux données reçues par les nœuds.

L'invention concerne aussi un dispositif de sécurisation d'un réseau local comprenant des nœuds permettant une extension de couverture de communication sans fil afin d'augmenter la portée du réseau local en coordonnant plusieurs points d'accès intégrés aux nœuds, les nœuds étant interconnectés grâce à un sous-réseau d'acheminement, chaque nœud du sous-réseau d'acheminement émettant au moins un réseau sans fil appelé réseau frontal, caractérisé en ce que le dispositif comporte :
des moyens de détection de la connexion d'une station par l'intermédiaire d'une liaison filaire à un commutateur de réseau, ledit commutateur de réseau étant relié au sous-réseau d'acheminement par une liaison filaire,
des moyens d'établissement de connexions sécurisées entre chaque nœud si la connexion de la station par l'intermédiaire d'une liaison filaire au commutateur de réseau est détectée, des moyens de gestion des nœuds du réseau reliés au commutateur de réseau avec des règles de filtrage appliquées aux données reçues par les nœuds.

Ainsi, la présente invention permet de remédier au problème de sécurité lié à l'utilisation d'un commutateur de réseau connecté au sous-réseau d'acheminement par l'intermédiaire d'une liaison filaire de type Ethernet.

Selon un mode particulier de l'invention, préalablement à l'établissement de connexions sécurisées, le procédé comporte une étape de détection par un nœud d'une information indiquant qu'au moins un nœud du réseau local a la fonctionnalité d'extension de couverture.

Selon un mode particulier de l'invention, le réseau local comporte en outre une passerelle permettant un accès à Internet et, préalablement à l'établissement des connexions sécurisées, une connexion IP permanente est établie, la connexion IP permanente étant différente de celle utilisée par la passerelle.

Selon un mode particulier de l'invention, si au moins deux nœuds sont reliés directement à la passerelle et que la passerelle n'implémente pas un mécanisme d'élection de maître pour l'attribution d'une adresse IP, les deux nœuds envoient des requêtes pour l'attribution d'une adresse IP en insérant dans un champ une information prédéterminée connue des autres nœuds, les nœuds relayant les requêtes en supprimant l'information du champ. Selon un mode particulier de l'invention, une connexion sécurisée est établie entre chaque paire de nœuds, les nœuds de chaque paire de nœuds générant des paramètres de cryptage pour la communication sécurisée.

Selon un mode particulier de l'invention, le procédé comporte l'étape de suppression de chaque boucle formée par la création d'une connexion sécurisée entre deux nœuds et la connexion antérieurement utilisée dans le sous-réseau d'acheminement entre les deux nœuds.

Selon un mode particulier de l'invention, les règles de filtrage appliquées aux données reçues par les nœuds sont appliquées pour autoriser la station connectée au commutateur réseau par l'intermédiaire de la liaison filaire à accéder uniquement à Internet par l'intermédiaire de la passerelle ou à accéder à la totalité du réseau local.

La présente invention concerne aussi un produit programme d'ordinateur. Il comprend des instructions pour implémenter, par un dispositif nœud, le procédé selon l'un des modes de réalisation précédents, lorsque ledit programme est exécuté par un processeur du dispositif nœud.

La présente invention concerne aussi un support de stockage. Il stocke un programme d'ordinateur comprenant des instructions pour implémenter, par un dispositif nœud, le procédé selon l'un des modes de réalisation précédents, lorsque ledit programme est exécuté par un processeur du dispositif nœud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1a] illustre schématiquement un premier exemple de réseau local dans lequel la présente invention est implémentée ;
[Fig. 1b] illustre schématiquement un second exemple de réseau local dans lequel la présente invention est implémentée ;
[Fig. 2] illustre schématiquement l'architecture d'un nœud dans lequel la présente invention est implémentée ;
[Fig. 3a] illustre un exemple de règles de filtrages appliquées au nœud Ext2 lorsque la station STA6b est autorisée uniquement à accéder au réseau Internet ;
[Fig. 3b] illustre un exemple de règles de filtrages appliquées au nœud Ext1 lorsque la station STA6b est autorisée uniquement à accéder au réseau Internet ;
[Fig. 4a] illustre un exemple de règles de filtrages appliquées au nœud Ext1 lorsque la station STA4b est autorisée à accéder à l'ensemble des équipements du réseau local ;
[Fig. 4b] illustre un exemple de règle de filtrages appliquées au nœud Ext2 lorsque la station STA4b est autorisée à accéder à l'ensemble des équipements du réseau local ;
[Fig. 4c] illustre un exemple de règles de filtrages appliquées au nœud Ext3 lorsque la station STA4b est autorisée à accéder à l'ensemble des équipements du réseau local ;
[Fig. 5] illustre un exemple d'un mode de réalisation.

### EXPOSE DETAILLE DE MODES DE REALISATION

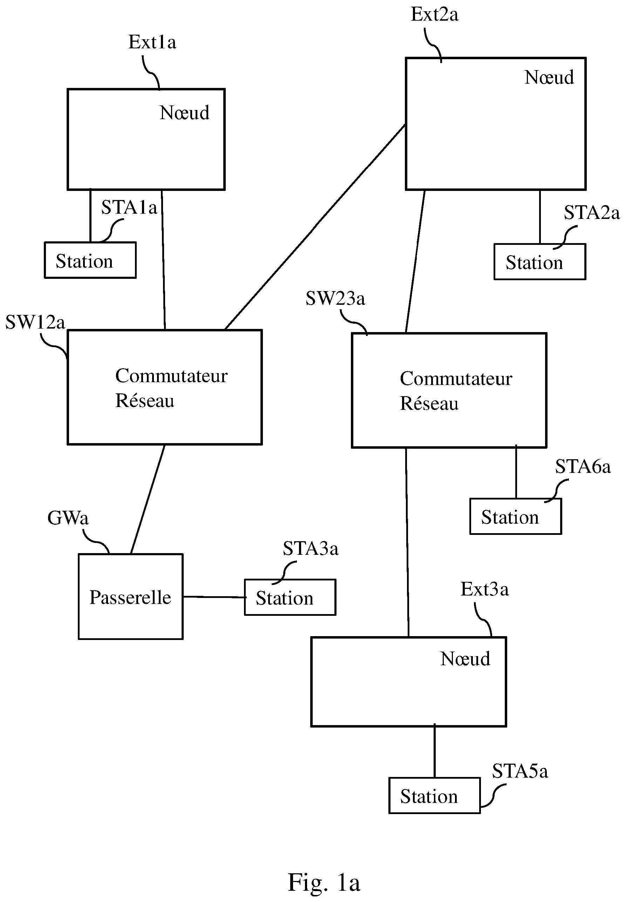

La Fig. 1a illustre schématiquement un premier réseau local dans lequel la présente invention est implémentée.

Le réseau local est construit autour d'un sous-réseau d'acheminement comportant un ensemble de nœuds Ext1a, Ext2a et Ext3a interconnectés. Chaque nœud Ext1a, Ext2a et Ext3a du sous-réseau d'acheminement comprend une pluralité d'interfaces radio :
- une interface radio dite « AP-BH » (pour « Access Point Backhaul » en anglais) correspondant à une interface point d'accès du sous-réseau d'acheminement,
- une interface radio « ST-BH » (pour « Station Backhaul » en anglais) correspondant à une interface client du sous-réseau d'acheminement,
- une interface radio « AP-FH » (pour « Access Point Fronthaul » en anglais) correspondant à une interface point d'accès du réseau local, cette interface étant dédiée à l'association de stations ou terminaux.

Dans le cadre de la technologie Wi-Fi (marque déposée), tous ces points d'accès AP-FH utilisent ainsi un même identifiant SSID et un même mot de passe. La zone de couverture du réseau local ainsi constitué autour du système d'extension de couverture de communication sans fil, est alors étendue de manière transparente pour chaque terminal, ou station, qui s'y connecte.

Les nœuds Ext1a, Ext2a et Ext3a du sous-réseau d'acheminement sont connectés les uns aux autres grâce à une structure en forme d'arbre, un nœud pouvant alors servir de relais entre deux autres nœuds du sous-réseau d'acheminement. Les nœuds Ext1a, Ext2a et Ext3a sont ainsi interconnectés grâce à des liaisons filaires, par exemple de type Ethernet, ou à des liaisons sans fil. Les nœuds Ext1a, Ext2a et Ext3a du sous-réseau d'acheminement communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais).

De manière illustrative, la Fig. 1a montre que le nœud Ext1a est connecté à un commutateur réseau SW12a, le nœud EXT2a est relié à un commutateur SW23a et au commutateur SW12a, le nœud Ext3a est connecté au commutateur réseau SW23a, le commutateur réseau SW12a est relié à une passerelle GW1a d'accès à l'Internet.

Une station STA1a est connectée à l'interface point d'accès radio du nœud Ext1a, une station STA2a est connectée à l'interface point d'accès radio du nœud Ext2a, une station STA3a est connectée à l'interface point d'accès radio de la passerelle GWa, une station STA6a est connectée par une liaison filaire de type Ethernet au commutateur réseau SW23a et une station STA5a est connectée à l'interface point d'accès radio du nœud Ext3a.

Le système d'extension de couverture de communication sans fil permet aux stations STA1a, STA2a, STA3a, STA5a et STA6a d'accéder au réseau Internet par l'intermédiaire de la passerelle GWa.

Les stations sont par exemple, des téléphones intelligents (« smartphone » en anglais) ou une tablette, un ordinateur, une télévision, une unité de stockage en réseau NAS (« Network Attached Storage » en anglais).

Les nœuds du sous-réseau d'acheminement connaissent la topologie du sous-réseau d'acheminement et du réseau local grâce à l'analyse des informations dont ils disposent localement et aux messages relatifs à la topologie du réseau qu'ils reçoivent des autres nœuds.

Généralement, les nœuds utilisent un pont (Bridge en anglais) pour relier entre elles les différentes interfaces des réseaux Backhaul et Fronthaul. Le pont possède une table d'association entre chaque adresse MAC d'un équipement et l'interface physique ou port sur laquelle l'équipement est relié. Tous les équipements connectés sur l'interface Fronthaul d'un point d'accès sont connus.

Dans la Fig. 1a, la station STA6a n'est pas associée à une interface FrontHaul. Cependant, dans le cas de la station ST6a, la station STA6a étant annoncée par les nœuds Ext2a et Ext3a connectés au commutateur réseau SW23a comme étant vue sur une de leurs interfaces Backhaul, les nœuds Ext2a et Ext3a peuvent en déduire la présence d'un commutateur réseau entre eux dès que la station ST6a transmet des données.

Chaque nœud Ext1a à Ext3a peut indiquer sa fonctionnalité d'extension de couverture de communication sans fil dans des options comprises dans une requête DHCP (acronyme de Dynamic Host Configuration Protocol en anglais) ou protocole de configuration dynamique des hôtes. Lors de la détection d'un câble Ethernet branché sur un port du commutateur réseau SW23a, l'interface Ethernet correspondante est activée dans le commutateur réseau SW23a. Tant qu'une requête DHCP avec l'option permettant d'identifier la fonctionnalité d'extension de couverture n'est pas reçue, le port Ethernet peut recevoir du trafic non chiffré en provenance d'une station connectée au Fronthaul. Tout le trafic de gestion du sous-réseau d'acheminement est filtré sur ce port. Ceci permet d'éviter de diffuser des informations de manière non sécurisée vers la station STA6a. Dès qu'une requête DHCP avec l'option permettant d'identifier la fonctionnalité d'extension de couverture est reçue, une mise en place d'une connexion sécurisée, appelée tunnel, est exécutée. Afin de simplifier la mise en place du tunnel, il est souhaitable de mettre en place une connexion IP permanente entre les nœuds Ext1a à Ext3a, indépendamment de la présence de la passerelle GWa. Par exemple, un réseau local virtuel VLAN (Virtual Local Area Network) est créé par chaque nœud, configuré sur un réseau différent de celui utilisé par la passerelle GW, grâce à un serveur DHCP hébergé par un des nœuds Ext1a, Ext2a ou Ext3a qui est considéré comme maître et des DHCP clients démarrés sur chaque autre nœud considéré comme esclave, ou conformément au protocole tel que défini dans la rfc3927 : Dynamic Configuration of IPv4 Link-Local Addresses.

Pour l'établissement de la connexion sécurisée, des paramètres de cryptage sont nécessaires. La génération et le stockage des paramètres de cryptage sont déclenchés lors de l'association, ou de la première communication d'un nœud Ext1a à Ext3a, avec le réseau local. Des informations de cryptage sont générées pour chaque paire de nœuds, identifiés par exemple par leur numéro de série. Ainsi, un nœud peut facilement déterminer grâce au numéro de série contenu dans une requête DHCP, si la génération des informations de chiffrement a déjà été effectuée entre le nœud ayant émis la requête DHCP et lui-même. Le nœud qui reçoit la requête DHCP est à l'initiative de la phase de génération des paramètres de cryptage.

Par exemple, dans le cas d'utilisation d'un tunnel de type OpenVPN, protocole VPN open source qui utilise TLS/SSL (Secure Socket Layer) pour établir des connections Internet cryptées et authentifiées entre deux machines, le protocole SSL s'appuie sur l'utilisation de clés de chiffrement asymétriques. Les deux clés asymétriques offrent la propriété qu'un message chiffré par une des clés de la paire ne soit déchiffrable que par la seconde clé de la paire, et inversement. De plus, des certificats sont émis par des autorités de certification, et lient la clé publique, l'identité de l'autorité de certification et l'identité de l'émetteur de la clé publique.

Ainsi, chaque nœud peut démarrer un serveur VPN en utilisant sa clé privée, un certificat associé, un certificat racine ayant servi à le chiffer et sa clé. Il peut ainsi être client ou serveur d'un lien sécurisé OpenVPN avec tous les autres nœuds du réseau.

Le nœud maître est par exemple déterminé de la manière suivante. Les nœuds, lorsqu'ils sont ajoutés dans le réseau local, envoient un message DHCP tel que DHCP DISCOVER et DHCP REQUEST et indiquent leur fonctionnalité d'extension de couverture et qu'ils supportent le mécanisme d'élection du nœud maître ainsi que l'adresse IP de leur VLAN. Si la passerelle GWa n'implémente pas le mécanisme d'élection du nœud maître, lorsque la passerelle GWa reçoit le message DHCP, la passerelle GWa ignore la fonctionnalité d'extension de couverture sans insérer dans ses réponses DHCP OFFER et DHCP ACK l'option indiquant qu'elle implémente la fonctionnalité d'extension de couverture. Le nœud nouvellement ajouté sait ainsi que la passerelle GWa ne supporte pas ce mécanisme d'élection et démarre un mécanisme de relais DHCP afin de permettre son utilisation en cas de connexion ultérieure d'autres nœuds. Lorsqu'un autre nœud est ajouté au réseau local, celui-ci envoie un message DHCP tel que DHCP DISCOVER ou DHCP REQUEST qui indique sa fonctionnalité d'extension de couverture. Le message est relayé par le nœud antérieurement ajouté à un serveur DHCP qui insère dans sa réponse l'option permettant d'identifier la fonctionnalité d'extension de couverture, et démarre son serveur de tunnel. Si la passerelle GWa implémente le mécanisme d'élection du nœud maître, le message est reçu par la passerelle GWa qui insère alors dans la réponse une information indiquant sa fonctionnalité d'extension de couverture, active son serveur de tunnel et insère dans une option privée du message l'adresse IP de son VLAN.

Dans les cas précédemment cités, si une information indiquant la fonctionnalité d'extension de couverture est présente, le nœud extrait de la réponse l'adresse IP du VLAN présente dans une option privée du message et démarre son client pour établir un tunnel avec le serveur possédant cette adresse IP.

Lorsqu'au moins deux nœuds sont reliés directement à une passerelle GWa qui n'implémente pas le mécanisme d'élection du nœud maître, ceux-ci utilisent une option dans le paquet DHCP situé dans l'intervalle 224 à 254 réservé à un « usage privé ». En envoyant dans les requêtes DHCP une option 224 contenant une valeur prédéterminée connue de tous les nœuds, un nœud peut identifier un autre nœud disposant de la fonctionnalité d'extension de couverture comme étant la source de la requête. Les serveurs relais DHCP présents sur les nœuds interceptent les requêtes et changent le contenu de l'option. Ainsi, en modifiant le contenu de l'option 224 lorsque les paquets DHCP DISCOVER ou REQUEST sont relayés, un nœud peut déterminer la présence d'un autre nœud entre lui et le nœud ayant émis la requête DHCP et activer son serveur de tunnel.

Il est à remarquer ici que, alternativement au DHCP, ce principe de découverte est extensible à tous les mécanismes de découverte tels que DHCPv6, ICMPv6 définis par la RFC 4861 (Neighbors Discovery)...

Le tunnel est donc configuré sur le VLAN utilisant un adressage réseau IP différent de celui du Backhaul pour garantir une connectivité IP permanente, indépendamment des différentes règles de filtrage qui pourraient être insérées. Le trafic nécessaire au fonctionnent du tunnel ne passe pas directement par les ponts compris dans les nœuds qui ne font pas d'apprentissage des adresses MAC lors de l'établissement du tunnel.

Sur chaque nœud aux extrémités du tunnel, une interface virtuelle notée tap0 est créée pour émettre et recevoir les données cryptées. Ces interfaces virtuelles sont insérées dans le pont Backhaul. Ceci va créer une boucle entre les deux ponts qui sont maintenant reliés directement via leurs interfaces classiques Backhaul notées eth0 et par les interfaces virtuelles tap0 du tunnel.

Pour un tunnel entre deux nœuds dont l'un ne possède pas de lien direct avec la passerelle GWa fournissant l'accès à Internet, les données sur l'interface eth0 non sécurisée des deux noeuds ne sont pas transférées vers le Backhaul ou le Fronthaul.

Ainsi, seules les données provenant du tunnel sont autorisées à transiter vers le Backhaul et le Fronthaul et à joindre la pile locale qui mémorise temporairement les données reçues et transmises par le nœud. De même, toutes les données émises par le nœud doivent être envoyées dans le tunnel.

Pour un tunnel entre deux nœuds dont l'un possède un lien avec la passerelle GWa, soit directement soit via un commutateur de réseau, l'interface Ethernet du nœud relié à la passerelle GWa va être utilisée pour router les paquets des stations qui lui sont connectées vers la passerelle GWa pour un accès Internet. Un pont est configuré avec la même adresse IP que celle obtenue sur le lien Ethernet et va être utilisé pour router les paquets sur le Fronthaul et le Backhaul du nœud.

Un ou les nœuds qui détectent une connectivité avec la passerelle GWa sur une interface Ethernet, par exemple les nœuds Ext1a ou Ext2a, suppriment l'interface Ethernet de son pont afin d'utiliser le pont dans une fonction de routeur du réseau local, stoppent le DHCP client sur le pont réseau local et créent un nouveau pont directement sur l'interface Ethernet qui a été supprimée du pont. L'adresse IP obtenue est également configurée sur le pont réseau local, mais sans ajouter de route pour le réseau local dans la table de routage du nouveau pont qui contient déjà une route permettant de joindre le réseau à partir du nouveau pont via une interface Ethernet présente sur le pont du nœud Ext2a sur laquelle a été détectée une connectivité avec Ext1a appelée ext2tosw12. Cette interface permet l'émission de données à Ext1a ou la réception de données de Ext1a.

La route permettant de joindre le réseau avec l'adresse IP obtenue via une interface br2 est insérée dans une table de routage annexe. La table de routage annexe est une nouvelle table créée pour router les données vers le pont local. L'interface br2 est le pont local de Ext2a créé par une commande de gestion de pont qui permet de relayer les données entre les interfaces qu'elle gère, vers toutes les interfaces si le paquet est diffusé vers une adresse de diffusion large (broadcast en anglais) ou vers le port permettant de joindre l'adresse MAC de destination.

Afin de router correctement les paquets à destination des stations connectées au nœud, aussi bien sur le Backhaul que le Fronthaul, des règles de routage sont ajoutées afin d'utiliser la table de routage annexe pour l'autre nœud du tunnel et les stations qui sont connectées aux nœuds du réseau fronthaul et Backhaul.

Le relais DHCP est démarré entre le pont réseau local et l'interface br2 connectée à la passerelle GW, un relais DHCP est démarré entre le pont LAN et l'interface br2 connectée à la passerelle afin de permettre aux requêtes DHCP reçues sur l'interface br2 d'être relayées vers la passerelle joignable via une interface appelée ext2tosw12 créée pour transmettre des données vers l'autre nœud du tunnel.

L'interface Br2 sert à router les données dans le réseau Backhaul et ext2osw12 sert à router les données vers la passerelle GW.

Un proxy de résolution d'adresse ARP (acronyme de Address Resolution Protocol en anglais) est créé afin que le nœud puisse répondre aux requêtes ARP arrivant sur l'interface ext2tosw12 pour résoudre les adresses présentes sur l'interface br2, et inversement. Ainsi, sur réception d'une requête ARP sur l'interface br2 par exemple, le proxy ARP va relayer la requête sur l'interface ext2tosw12 puisque cette interface possède une adresse IP appartenant au réseau configuré sur les interfaces br2 et ext2osw12 et, sur réception de la réponse, répondre positivement à la requête sur l'interface br2.

Deux règles de filtrage sont également établies pour que les paquets DHCP relayés vers la passerelle GWa ne soient pas transmis à l'autre nœud du tunnel.

Dans cette configuration, la station STA6a connectée à un commutateur réseau ne peut communiquer avec aucun autre équipement, nœud, station ou passerelle du réseau local car elle n'est pas connectée à un tunnel, les données transmises étant filtrées.

Il est possible de déroger à cette règle en autorisant la station STA6a à communiquer en partie ou en totalité avec les équipements du réseau local, soit de manière prédéfinie soit par une action du détenteur du réseau local par l'intermédiaire d'une interface graphique. Les nœuds vont détecter la station STA6a comme cela a été mentionné précédemment. Par exemple, le détenteur du réseau local peut autoriser uniquement un accès au réseau Internet ou autoriser l'accès à la totalité du réseau local.

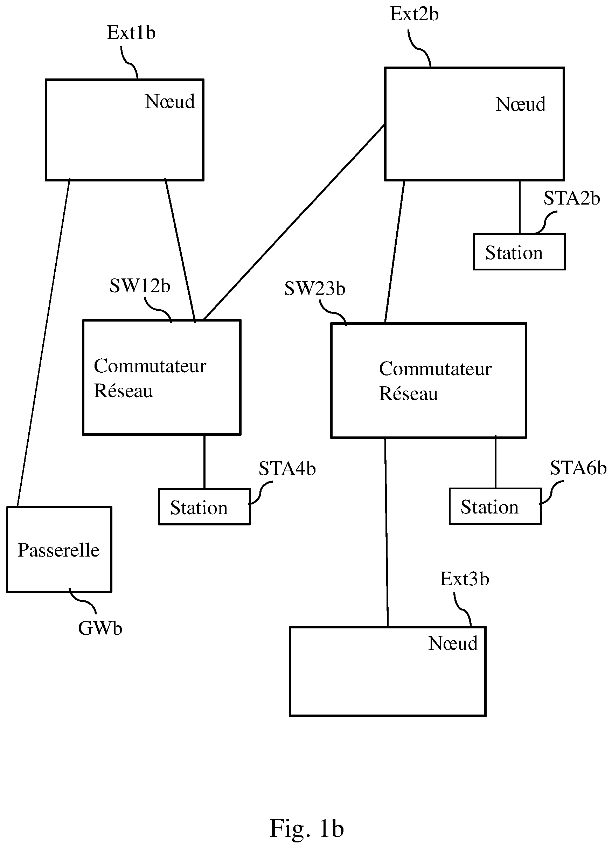

La Fig. 1b illustre schématiquement un second exemple de réseau local dans lequel la présente invention est implémentée.

Le réseau local est construit autour d'un sous-réseau d'acheminement comportant un ensemble de nœuds Ext1b, Ext2b et Ext3b interconnectés. Chaque nœud Ext1b, Ext2b et Ext3b du sous-réseau d'acheminement comprend une pluralité d'interfaces radio :
- une interface radio dite « AP-BH » (pour « Access Point Backhaul » en anglais) correspondant à une interface point d'accès du sous-réseau d'acheminement,
- une interface radio « ST-BH » (pour « Station Backhaul » en anglais) correspondant à une interface client du sous-réseau d'acheminement,
- une interface radio « AP-FH » (pour « Access Point Fronthaul » en anglais) correspondant à une interface point d'accès du réseau local, cette interface étant dédiée à l'association de stations ou terminaux.

Dans le cadre de la technologie Wi-Fi (marque déposée), tous ces points d'accès AP-FH utilisent ainsi un même identifiant SSID et un même mot de passe. La zone de couverture du réseau local ainsi constitué autour du système d'extension de couverture de communication sans fil, est alors étendue de manière transparente pour chaque terminal, ou station, qui s'y connecte.

Les nœuds Ext1b, Ext2b et Ext3b du sous-réseau d'acheminement sont connectés les uns aux autres grâce à une structure en forme d'arbre, un nœud pouvant alors servir de relais entre deux autres nœuds du sous-réseau d'acheminement. Les nœuds Ext1b, Ext2b et Ext3b sont ainsi interconnectés grâce à des liaisons filaires, par exemple de type Ethernet, ou à des liaisons sans fil. Les nœuds Ext1b, Ext2b et Ext3b du sous-réseau d'acheminement communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais).

De manière illustrative, la Fig. 1b montre que le nœud Ext1b est connecté à un commutateur réseau SW12b, le nœud EXT2b est relié à un commutateur SW23b et au commutateur SW12b, le nœud Ext3b est connecté au commutateur réseau SW23b, le nœud Ext1b est relié à une passerelle GW1b d'accès à l'Internet.

Une station STA2b est connectée à l'interface point d'accès radio du nœud Ext2b, une station STA6b est connectée par une liaison filaire de type Ethernet au commutateur réseau SW23b et une station STA4b est connectée par une liaison filaire de type Ethernet au commutateur réseau SW12b.

Le système d'extension de couverture de communication sans fil permet aux stations STA2b, STA4b et STA6b d'accéder au réseau Internet par l'intermédiaire de la passerelle GWb.

Les stations sont par exemple, des téléphones intelligents (« smartphone » en anglais) ou une tablette, un ordinateur, une télévision, une unité de stockage en réseau NAS (« Network Attached Storage » en anglais).

Les nœuds du sous-réseau d'acheminement connaissent la topologie du sous-réseau d'acheminement et du réseau local grâce à l'analyse des informations dont ils disposent localement et aux messages relatifs à la topologie du réseau qu'ils reçoivent des autres nœuds.

Généralement, les nœuds utilisent un pont (Bridge en anglais) pour relier entre elles les différentes interfaces des réseaux Backhaul et Fronthaul. Le pont possède une table d'association entre chaque adresse MAC d'un équipement et l'interface physique ou port sur lequel l'équipement est relié. Tous les équipements connectés sur l'interface Fronthaul d'un point d'accès sont connus.

Dans la Fig. 1b, la station STA6b n'est pas associée à une interface FrontHaul. Cependant, dans le cas de la station ST6b, la station STA6b étant annoncée par les nœuds Ext2b et Ext3ba connectés au commutateur réseau SW23b comme étant vue sur une de leurs interfaces Backhaul, les nœuds Ext2b et Ext3b peuvent en déduire la présence d'un commutateur réseau entre eux dès que la station ST6b transmet des données.

La station STA4b n'est pas associée à une interface FrontHaul. Cependant, dans le cas de la station ST4b, la station STA4b étant annoncée par les nœuds Ext1b et Ext2b connectés au commutateur réseau SW23b comme étant vue sur une de leurs interfaces Backhaul, les nœuds Ext2b et Ext3b peuvent en déduire la présence d'un commutateur réseau entre eux dès que la station ST4b transmet des données.

Chaque nœud Ext1b à Ext3b peut indiquer sa fonctionnalité d'extension de couverture de communication sans fil dans des options comprises dans une requête DHCP (acronyme de Dynamic Host Configuration Protocol en anglais) ou protocole de configuration dynamique des hôtes. Lors de la détection d'un câble Ethernet branché sur un port du commutateur réseau SW23b, l'interface Ethernet correspondante est activée dans le commutateur réseau SW23b. Tant qu'une requête DHCP avec l'option permettant d'identifier la fonctionnalité d'extension de couverture n'est pas reçue, le port Ethernet peut recevoir du trafic non chiffré en provenance d'une station connectée au Fronthaul. Tout le trafic de gestion du sous-réseau d'acheminement est filtré sur ce port. Ceci permet d'éviter de diffuser des informations de manière non sécurisée vers la station STA6a. Dès qu'une requête DHCP avec l'option permettant d'identifier la fonctionnalité d'extension de couverture est reçue, une mise en place d'une connexion sécurisée, appelée tunnel, est exécutée. Afin de simplifier la mise en place du tunnel, il est souhaitable de mettre en place une connexion IP permanente entre les nœuds Ext1b à Ext3b, indépendamment de la présence de la passerelle GWb. Par exemple, un réseau local virtuel VLAN (Virtual Local Area Network) est créé par chaque nœud, configuré sur un réseau différent de celui utilisé par la passerelle GWb, grâce à un serveur DHCP hébergé par un des nœuds Ext1b, Ext2b ou Ext3b qui est considéré comme maître et des DHCP clients démarrés sur chaque autre nœud considéré comme esclave, ou conformément au protocole tel que défini dans la rfc3927 : Dynamic Configuration of IPv4 Link-Local Addresses.

Pour l'établissement de la connexion sécurisée, des paramètres de cryptage sont nécessaires. La génération et le stockage des paramètres de cryptage sont déclenchés lors de l'association, ou de la première communication d'un nœud Ext1b à Ext3b avec le réseau local. Des informations de cryptage sont générées pour chaque paire de nœuds, identifiés par exemple par leur numéro de série. Ainsi, un nœud peut facilement déterminer grâce au numéro de série contenu dans une requête DHCP, si la génération des informations de chiffrement a déjà été effectuée entre le nœud ayant émis la requête DHCP et lui-même. Le nœud qui reçoit la requête DHCP est à l'initiative de la phase de génération des paramètres de cryptage.

Par exemple, dans le cas d'utilisation d'un tunnel de type OpenVPN, protocole VPN open source qui utilise TLS/SSL (Secure Socket Layer) pour établir des connections Internet cryptées et authentifiées entre deux machines, le protocole SSL s'appuie sur l'utilisation de clés de chiffrement asymétriques. Les deux clés asymétriques offrent la propriété qu'un message chiffré par une des clés de la paire ne soit déchiffrable que par la seconde clé de la paire, et inversement. De plus, des certificats sont émis par des autorités de certification, et lient la clé publique, l'identité de l'autorité de certification et l'identité de l'émetteur de la clé publique.

Ainsi, chaque nœud peut démarrer un serveur VPN en utilisant sa clé privée, un certificat associé, un certificat racine ayant servi à le chiffer et sa clé. Il peut ainsi être client ou serveur d'un lien sécurisé OpenVPN avec tous les autres nœuds du réseau.

Le nœud maître est par exemple déterminé de la manière suivante. Les nœuds, lorsqu'ils sont ajoutés dans le réseau local, envoient un message DHCP tel que DHCP DISCOVER et DHCP REQUEST et indiquent leur fonctionnalité d'extension de couverture et qu'ils supportent le mécanisme d'élection du nœud maître ainsi que l'adresse IP de leur VLAN. Si la passerelle GWb n'implémente pas le mécanisme d'élection du nœud maître, lorsque la passerelle GWb reçoit le message DHCP, la passerelle GWb ignore la fonctionnalité d'extension de couverture sans insérer dans ses réponses DHCP OFFER et DHCP ACK l'option indiquant qu'elle implémente la fonctionnalité d'extension de couverture. Le nœud nouvellement ajouté sait ainsi que la passerelle GWb ne supporte pas ce mécanisme d'élection et démarre un mécanisme de relais DHCP afin de permettre son utilisation en cas de connexion ultérieure d'autres nœuds. Lorsqu'un autre nœud est ajouté au réseau local, celui-ci envoie un message DHCP tel que DHCP DISCOVER ou DHCP REQUEST qui indique sa fonctionnalité d'extension de couverture. Le message est relayé par le nœud antérieurement ajouté à un serveur DHCP qui insère dans sa réponse l'option permettant d'identifier la fonctionnalité d'extension de couverture, et démarre son serveur de tunnel. Si la passerelle GWb implémente le mécanisme d'élection du nœud maître, le message est reçu par la passerelle GWb qui insère alors dans la réponse une information indiquant sa fonctionnalité d'extension de couverture, active son serveur de tunnel et insère dans une option privée du message l'adresse IP de son VLAN.

Dans les cas précédemment cités, si une information indiquant la fonctionnalité d'extension de couverture est présente, le nœud extrait de la réponse l'adresse IP du VLAN présente dans une option privée du message et démarre son client pour établir un tunnel avec le serveur possédant cette adresse IP.

Lorsqu'au moins deux nœuds sont reliés directement à une passerelle GWb qui n'implémente pas le mécanisme d'élection du nœud maître, ceux-ci utilisent une option dans le paquet DHCP situé dans l'intervalle 224 à 254 réservé à un « usage privé ». En envoyant dans les requêtes DHCP une option 224 contenant une valeur prédéterminée connue de tous les nœuds, un nœud peut identifier un autre nœud disposant de la fonctionnalité d'extension de couverture comme étant la source de la requête. Les serveurs relais DHCP présents sur les nœuds interceptent les requêtes et changent le contenu de l'option. Ainsi, en modifiant le contenu de l'option 224 lorsque les paquets DHCP DISCOVER ou REQUEST sont relayés, un nœud peut déterminer la présence d'un autre nœud entre lui et le nœud ayant émis la requête DHCP et activer son serveur de tunnel.

Il est à remarquer ici que, alternativement au DHCP, ce principe de découverte est extensible à tous les mécanismes de découverte tels que DHCPv6, ICMPv6 définis par la RFC 4861 (Neighbors Discovery)...

Le tunnel est donc configuré sur le VLAN utilisant un adressage réseau IP différent de celui du Backhaul pour garantir une connectivité IP permanente, indépendamment des différentes règles de filtrage qui pourraient être insérées. Le trafic nécessaire au fonctionnement du tunnel ne passe pas directement par les ponts compris dans les nœuds qui ne font pas d'apprentissage des adresses MAC lors de l'établissement du tunnel.

Sur chaque nœud aux extrémités du tunnel, une interface virtuelle notée tap0 est créée pour émettre et recevoir les données cryptées. Ces interfaces virtuelles sont insérées dans le pont Backhaul. Ceci va créer une boucle entre les deux ponts qui sont maintenant reliés directement via leurs interfaces classiques Backhaul notées eth0 et par les interfaces virtuelles tap0 du tunnel.

Pour un tunnel entre deux nœuds dont l'un ne possède pas de lien direct avec la passerelle GWb fournissant l'accès à Internet, les données sur l'interface eth0 non sécurisée des deux noeuds ne sont pas transférées vers le Backhaul ou le Fronthaul.

Ainsi, seules les données provenant du tunnel sont autorisées à transiter vers le Backhaul et le Fronthaul et à joindre la pile locale qui mémorise temporairement les données reçues et transmises par le nœud. De même, toutes les données émises par le nœud doivent être envoyées dans le tunnel.

Pour un tunnel entre deux nœuds dont l'un possède un lien avec la passerelle GWb, soit directement soit via un commutateur de réseau, l'interface Ethernet du nœud relié à la passerelle GWb va être utilisée pour router les paquets des stations qui lui sont connectées vers la passerelle GWb pour un accès Internet. Un pont est configuré avec la même adresse IP que celle obtenue sur le lien Ethernet et va être utilisé pour router les paquets sur le Fronthaul et le Backhaul du nœud.

Un ou les nœuds qui détectent une connectivité avec la passerelle GWb sur une interface Ethernet, par exemple les nœuds Ext1b ou Ext2ab, suppriment l'interface Ethernet de son pont afin d'utiliser le pont dans une fonction de routeur du réseau local, stoppent le DHCP client sur le pont réseau local et créent un nouveau pont directement sur l'interface Ethernet qui a été supprimée du pont. L'adresse IP obtenue est également configurée sur le pont réseau local, mais sans ajouter de route pour le réseau local dans la table de routage du nouveau pont qui contient déjà une route permettant de joindre le réseau à partir du nouveau pont via une interface Ethernet présente sur le pont du nœud Ext2b sur laquelle a été détectée une connectivité avec Ext1b appelée ext2tosw12. Cette interface permet l'émission de données à Ext1b ou la réception de données de Ext1b.

La route permettant de joindre le réseau avec l'adresse IP obtenue via une interface br2 est insérée dans une table de routage annexe. La table de routage annexe est une nouvelle table créée pour router les données vers le pont local. L'interface br2 est le pont local de Ext2b créé par une commande de gestion de pont qui permet de relayer les données entre les interfaces qu'elle gère, vers toutes les interfaces si le paquet est diffusé vers une adresse de diffusion large (broadcast en anglais) ou vers le port permettant de joindre l'adresse MAC de destination.

Afin de router correctement les paquets à destination des stations connectées au nœud, aussi bien sur le Backhaul que le Fronthaul, des règles de routage sont ajoutées afin d'utiliser la table de routage annexe pour l'autre nœud du tunnel et les stations qui sont connectées aux nœuds du réseau Fronthaul et Backhaul.

Le relais DHCP est démarré entre le pont réseau local et l'interface br2 connectée à la passerelle GW, un relais DHCP est démarré entre le pont LAN et l'interface br2 connectée à la passerelle afin de permettre aux requêtes DHCP reçues sur l'interface br2 d'être relayées vers la passerelle joignable via une interface appelée ext2tosw12 créée pour transmettre des données vers l'autre nœud du tunnel.

L'interface Br2 sert à router les données dans le réseau Backhaul et ext2osw12 sert à router les données vers la passerelle GW.

Un proxy de résolution d'adresse ARP (acronyme de Address Resolution Protocol en anglais) est créé afin que le nœud puisse répondre aux requêtes ARP arrivant sur l'interface ext2tosw12 pour résoudre les adresses présentes sur l'interface br2, et inversement. Ainsi sur réception d'une requête ARP sur l'interface br2 par exemple, le proxy ARP va relayer la requête sur l'interface ext2tosw12 puisque cette interface possède une adresse IP appartenant au réseau configuré sur les interfaces br2 et ext2osw12 et sur réception de la réponse, répondre positivement à la requête sur l'interface br2.

Deux règles de filtrage sont également établies pour que les paquets DHCP relayés vers la passerelle GWb ne soient pas transmis à l'autre nœud du tunnel.

Dans cette configuration, les stations STA4b et STA6b connectées à un commutateur réseau ne peuvent communiquer avec aucun autre équipement, nœud, station ou passerelle du réseau local car elles ne sont pas connectées à un tunnel, les données transmises étant filtrées.

Il est possible de déroger à cette règle en autorisant une ou les stations STA4b, STA6b à communiquer en partie ou en totalité avec les équipements du réseau local, soit de manière prédéfinie soit par une action du détenteur du réseau local par l'intermédiaire d'une interface graphique.

Les nœuds vont détecter les stations STA4b et STA6b comme cela a été mentionné précédemment.

Par exemple, le détenteur du réseau local peut autoriser uniquement un accès au réseau Internet ou autoriser l'accès à la totalité du réseau local.

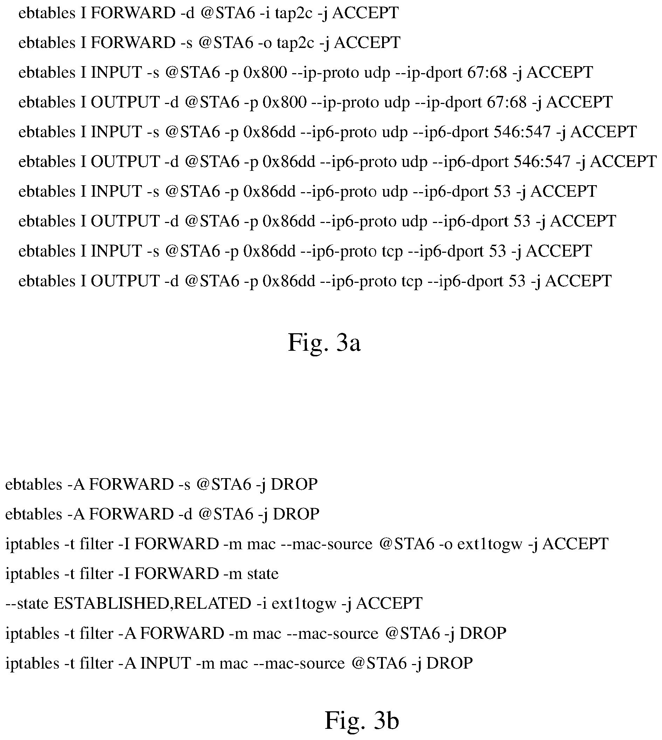

Par exemple, si le détenteur du réseau local autorise uniquement un accès au réseau Internet pour la station STA6b, la présente invention active des règles de filtrage au niveau du nœud Ext2b pour autoriser le trafic associé à l'adresse MAC de la station STA6b à emprunter le chemin aller/retour pour lui permettre de joindre la passerelle GWb. La présente invention active des règles de filtrage au niveau du nœud Ext1b connecté à la passerelle GWb, le chemin aller/retour lui permettant de joindre la passerelle GWb et si besoin de bloquer le transfert vers d'éventuels équipements joignables via le nœud Ext1b. Un exemple de règles de filtrage est donné en Figs. 3.

La Fig. 3a illustre un exemple de règle de filtrages appliquée au nœud Ext2 lorsque la station STA6b est autorisée uniquement à accéder au réseau Internet.

Dans la Fig. 3a, @STA6 est l'adresse MAC de la station STA6b, 67 :68 est le port DHCP relais IPV4, tap2 est le port du pont du nœud Ext2, 546 :547 est le port DHCP relai IPV6, port 53 est le port DNS.

Ebtables est un exemple de commande Linux permettant de configurer les règles de filtrage d'un pont.

La Fig. 3b illustre un exemple de règle de filtrages appliquée au nœud Ext1b lorsque la station STA6b est autorisée uniquement à accéder au réseau Internet.

Dans la Fig. 3b, @STA6 est l'adresse MAC de la station STA6b et ext1togw est le port permettant d'accéder à la passerelle GW.

Iptable est un exemple de commande Linux permettant de configurer les règles de filtrage appliquées aux données routées.

Par exemple, si le détenteur du réseau local autorise un accès à la totalité des équipements du réseau local pour la station STA4b, la présente invention active des règles de filtrage pour l'ensemble des nœuds du réseau tout en évitant de recréer des boucles comme précédemment décrit et en interdisant la transmission de données arrivant d'un équipement connecté via un commutateur réseau à deux nœuds dans le tunnel permettant à ces deux nœuds de communiquer.

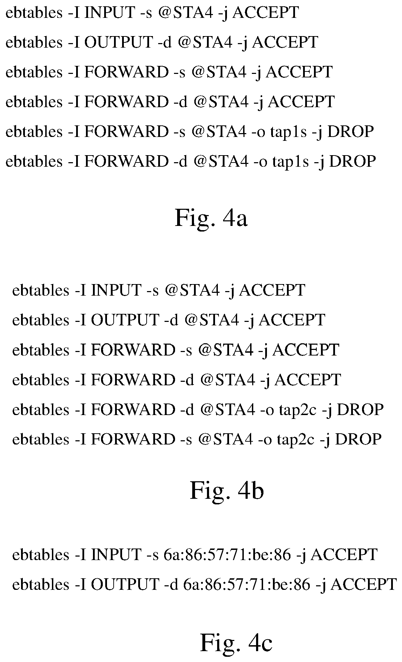

Un exemple de règle de filtrage est donné en Figs. 4.

La Fig. 4a illustre un exemple de règle de filtrages appliquée au nœud Ext1b lorsque la station STA4b est autorisée à accéder à l'ensemble des équipements du réseau local. Dans la Fig. 4a, @STA4 est l'adresse MAC de la station STA4b.

La Fig. 4b illustre un exemple de règle de filtrages appliquée au nœud Ext2b lorsque la station STA4b est autorisée à accéder à l'ensemble des équipements du réseau local.

Dans la Fig. 4b, @STA4 est l'adresse MAC de la station STA4b et tap2c est le port permettant d'émettre des données sécurisées à destination du nœud Ext1.

La Fig. 4c illustre un exemple de règle de filtrages appliquée au nœud Ext3 lorsque la station STA4b est autorisée à accéder à l'ensemble des équipements du réseau local. Dans la Fig. 4c, @STA4 est l'adresse MAC de la station STA4b.

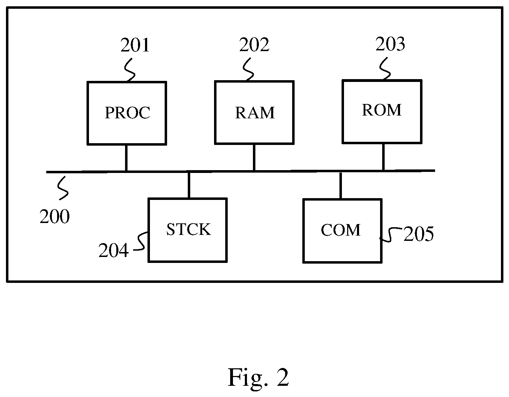

La Fig. 2 illustre schématiquement un exemple d'architecture matérielle d'un nœud implémentant la présente invention.

Selon l'exemple d'architecture matérielle représenté à la Fig. 2, chaque nœud Ext1a, Ext2a, Ext3a, Ext1b, Ext2b, Ext3b comprend alors, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au nœud de communiquer avec les équipements du réseau local.

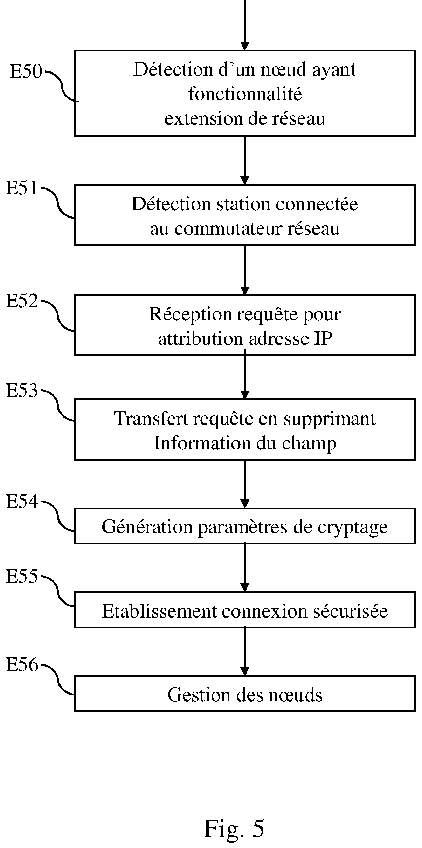

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le nœud est mis sous tension, le processeur 201 est capable de lire de la RAM 202 des instructions et de les exécuter. Ces instructions forment un programme d'ordinateur causant la mise en œuvre, par le processeur 201, de tout ou partie du procédé décrit en relation avec la Fig. 5.

Le procédé décrit ci-après en relation avec la Fig. 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le nœud comprend de la circuiterie électronique configurée pour mettre en œuvre les procédés décrits en relation avec la Fig. 5.

La Fig. 5 illustre un exemple d'un mode de réalisation.

A l'étape E50, on détecte une information indiquant qu'au moins un nœud du réseau local a la fonctionnalité d'extension de couverture.

A l'étape E51, on détecte la connexion d'une station par l'intermédiaire d'une liaison filaire à un commutateur de réseau, ledit commutateur de réseau étant relié au sous-réseau d'acheminement par une liaison filaire.

A l'étape E52, un nœud reçoit une requête pour l'attribution d'une adresse IP, ladite requête comprenant dans un champ une information prédéterminée connue des autres nœuds.

A l'étape E53, le nœud relaie la requête en supprimant l'information du champ.

A l'étape E54, les informations de cryptage sont générées.

A l'étape E55, les connexions sécurisées sont établies entre chaque nœud si la connexion de la station par l'intermédiaire d'une liaison filaire au commutateur de réseau est détectée. A l'étape E56, les nœuds du réseau reliés au commutateur de réseau sont gérés avec des règles de filtrage appliquées aux données reçues par les nœuds pour, par exemple, supprimer des boucles générées par la création des connexions sécurisées et/ou pour autoriser la station connectée au commutateur réseau par l'intermédiaire de la liaison filaire à accéder uniquement à Internet par l'intermédiaire de la passerelle ou à accéder à la totalité du réseau local.

Ainsi, il est possible de garantir la sécurité liée à l'utilisation d'un commutateur réseau sur le sous réseau d'acheminement en permettant la sécurisation des données, tout en conservant la possibilité de connecter une station au commutateur réseau et de gérer les accès de cette station au réseau local.

Dans un exemple, le commutateur réseau est de type switch et relie deux nœuds de type « extenders ». Ces extenders présentent des capacités sans fil « FrontHaul » permettant à des équipements sans fils de se connecter au réseau local tout en étendant la portée du réseau local. Le switch et les extenders sont connectés en mode filaire (par exemple via Ethernet ou courant porteur de ligne) au « BackHaul » ou sous-réseau d'acheminement du réseau local. Lorsqu'un équipement, tel qu'une station ou un extender, est nouvellement connecté en filaire au switch, une détection de cette nouvelle connexion est opérée, des connexions sécurisées entre les extenders reliés au switch sont établies, et une gestion des extenders reliés au switch avec des règles de filtrage est réalisée. Il est alors possible de sécuriser les connexions entre les extenders, tout en ayant la possibilité de gérer les extenders afin d'autoriser l'équipement nouvellement connecté à accéder au réseau, et par exemple, à présenter une nouvelle capacité « FrontHaul ».

## Revendications

1. Procédé de sécurisation d'un réseau local comprenant des nœuds (Ext1, Ext2, Ext3) permettant une extension de couverture de communication sans fil afin d'augmenter la portée du réseau local en coordonnant plusieurs points d'accès intégrés aux nœuds, les nœuds étant interconnectés grâce à un sous-réseau d'acheminement, chaque nœud du sous-réseau d'acheminement émettant au moins un réseau sans fil appelé réseau frontal, le procédé comprenant les étapes de :
- détection (E50) d'une connexion d'une station (STA6a) par l'intermédiaire d'une liaison filaire à un commutateur (SW23a) de réseau compris dans le réseau local, ledit commutateur de réseau étant relié au sous-réseau d'acheminement par une liaison filaire,
- établissement (E55) de connexions sécurisées entre chaque nœud si la connexion de la station par l'intermédiaire d'une liaison filaire au commutateur de réseau est détectée,
- gestion (E56) des nœuds du réseau reliés au commutateur de réseau avec des règles de filtrage appliquées aux données reçues par les nœuds.

2. Procédé selon la revendication 1, **caractérisé en ce que** préalablement à l'établissement de connexions sécurisées, le procédé comporte une étape de détection par un nœud d'une information indiquant qu'au moins un nœud du réseau local a la fonctionnalité d'extension de couverture.

3. Procédé selon la revendication 1 ou 2, **caractérisé en ce que** le réseau local comporte en outre une passerelle permettant un accès à Internet et **en ce que** préalablement à l'établissement des connexions sécurisées, une connexion IP permanente est établie, la connexion IP permanente étant différente de celle utilisée par la passerelle.

4. Procédé selon la revendication 3, **caractérisé en ce que** si au moins deux nœuds sont reliés directement à la passerelle et que la passerelle n'implémente pas un mécanisme d'élection de maître pour l'attribution d'une adresse IP, les deux nœuds envoient des requêtes pour l'attribution d'une adresse IP en insérant dans un champ une information prédéterminée connue des autres nœuds, les nœuds relayant les requêtes en supprimant l'information du champ.

5. Procédé selon l'une quelconque des revendications 1 à 4, **caractérisé en ce qu'**une connexion sécurisée est établie entre chaque paire de nœuds, les nœuds de chaque paire de nœuds générant des paramètres de cryptage pour la communication sécurisée.

6. Procédé selon l'une quelconque des revendications 1 à 5, **caractérisé en ce que** le procédé comporte en outre l'étape de suppression de chaque boucle formée par la création d'une connexion sécurisée entre deux nœuds et la connexion antérieurement utilisée dans le sous-réseau d'acheminement entre les deux nœuds.

7. Procédé selon l'une quelconque des revendications 3 à 6, **caractérisé en ce que** les règles de filtrage appliquées aux données reçues par les nœuds sont appliquées pour autoriser la station connectée au commutateur réseau par l'intermédiaire de la liaison filaire à accéder uniquement à Internet par l'intermédiaire de la passerelle ou à accéder à la totalité du réseau local.

8. Dispositif de sécurisation d'un réseau local comprenant des nœuds permettant une extension de couverture de communication sans fil afin d'augmenter la portée du réseau local en coordonnant plusieurs points d'accès intégrés aux nœuds, les nœuds étant interconnectés grâce à un sous-réseau d'acheminement, chaque nœud du sous-réseau d'acheminement émettant au moins un réseau sans fil appelé réseau frontal, **caractérisé en ce que** le dispositif comporte :
- des moyens de détection de la connexion d'une station par l'intermédiaire d'une liaison filaire à un commutateur de réseau, ledit commutateur de réseau étant relié au sous-réseau d'acheminement par une liaison filaire,
- des moyens d'établissement de connexions sécurisées entre chaque nœud si la connexion de la station par l'intermédiaire d'une liaison filaire au commutateur de réseau est détectée,
- des moyens de gestion des nœuds du réseau reliés au commutateur de réseau avec des règles de filtrage appliquées aux données reçues par les nœuds.

9. Un produit programme d'ordinateur **caractérisé en ce qu'**il comprend des instructions pour implémenter, par un nœud, le procédé selon l'une quelconque des revendications 1 à 7, lorsque ledit programme est exécuté par un processeur du nœud.

10. Un support de stockage **caractérisé en ce qu'**il stocke un programme d'ordinateur comprenant des instructions pour implémenter, par un nœud, le procédé selon l'une quelconque des revendications 1 à 7, lorsque ledit programme est exécuté par un processeur du nœud.

## Patentansprüche

1. Verfahren zur Sicherung eines lokalen Netzes, das Knoten (Ext1, Ext2, Ext3) umfasst, die eine Abdeckungserweiterung einer Drahtloskommunikation ermöglichen, um die Reichweite des lokalen Netzes zu erhöhen, indem mehrere Zugangspunkte koordiniert werden, die in die Knoten integriert sind, wobei die Knoten mithilfe eines Routing-Subnetzes miteinander verbunden sind, wobei jeder Knoten des Routing-Subnetzes wenigstens ein Drahtlosnetz emittiert, das Frontend-Netzwerk genannt wird, wobei das Verfahren die folgenden Schritte umfasst:
- Detektieren (E50) einer Verbindung einer Station (STA6a) mittels einer drahtgebundenen Verbindung mit einem Netzwerkswitch (SW23a), der im lokalen Netz enthalten ist, wobei der Netzwerkswitch durch eine drahtgebundene Verbindung mit dem Routing-Subnetz verbunden ist,
- Herstellen (E55) von gesicherten Verbindungen zwischen jedem Knoten, wenn die Verbindung der Station mittels einer drahtgebundenen Verbindung mit dem Netzwerkswitch detektiert wird,
- Verwalten (E56) der Knoten des Netzwerks, die mit dem Netzwerkswitch verbunden sind, mit Filterregeln, die auf die Daten angewendet werden, die durch die Knoten empfangen werden.

2. Verfahren nach Anspruch 1, **dadurch gekennzeichnet, dass** vor dem Herstellen von gesicherten Verbindungen das Verfahren einen Schritt des Detektierens einer Information durch einen Knoten aufweist, die angibt, dass wenigstens ein Knoten des lokalen Netzes die Abdeckungserweiterungs-Funktionalität aufweist.

3. Verfahren nach Anspruch 1 oder 2, **dadurch gekennzeichnet, dass** das lokale Netz ferner ein Gateway aufweist, das einen Zugang zum Internet ermöglicht, und dadurch, dass vor dem Herstellen der gesicherten Verbindungen eine permanente IP-Verbindung hergestellt wird, wobei sich die permanente IP-Verbindung von derjenigen unterscheidet, die von dem Gateway verwendet wird.

4. Verfahren nach Anspruch 3, **dadurch gekennzeichnet, dass**, wenn wenigstens zwei Knoten direkt mit dem Gateway verbunden sind und das Gateway keinen Mechanismus zur Wahl eines Masters für die Zuweisung einer IP-Adresse implementiert, die zwei Knoten Anfragen für die Zuweisung einer IP-Adresse senden, wobei sie eine vorbestimmte Information in ein Feld einfügen, die den anderen Knoten bekannt ist, wobei die Knoten die Anfragen unter Löschung der Information aus dem Feld weiterleiten.

5. Verfahren nach einem der Ansprüche 1 bis 4, **dadurch gekennzeichnet, dass** eine gesicherte Verbindung zwischen jedem Knotenpaar hergestellt wird, wobei die Knoten jedes Knotenpaars Verschlüsselungsparameter für die gesicherte Kommunikation erzeugen.

6. Verfahren nach einem der Ansprüche 1 bis 5, **dadurch gekennzeichnet, dass** das Verfahren ferner den Schritt des Löschens jeder Schleife, die durch die Herstellung einer gesicherten Verbindung zwischen zwei Knoten und die Verbindung, die zuvor im Routing-Subnetz zwischen den zwei Knoten verwendet wurde, gebildet wird, aufweist.

7. Verfahren nach einem der Ansprüche 3 bis 6, **dadurch gekennzeichnet, dass** die Filterregeln, die auf die Daten angewendet werden, die durch die Knoten empfangen werden, angewendet werden, um es der Station, die mit dem Netzwerkswitch mittels der drahtgebundenen Verbindung verbunden ist, zu gestatten, nur auf das Internet mittels des Gateways zuzugreifen oder auf das gesamte lokale Netz zuzugreifen.

8. Vorrichtung zur Sicherung eines lokalen Netzes, das Knoten umfasst, die eine Abdeckungserweiterung einer Drahtloskommunikation ermöglichen, um die Reichweite des lokalen Netzes zu erhöhen, indem mehrere Zugangspunkte koordiniert werden, die in die Knoten integriert sind, wobei die Knoten mithilfe eines Routing-Subnetzes miteinander verbunden sind, wobei jeder Knoten des Routing-Subnetzes wenigstens ein Drahtlosnetz emittiert, das Frontend-Netzwerk genannt wird, **dadurch gekennzeichnet, dass** die Vorrichtung Folgendes aufweist:
- Mittel zum Detektieren der Verbindung einer Station mittels einer drahtgebundenen Verbindung mit einem Netzwerkswitch, wobei der Netzwerkswitch durch eine drahtgebundene Verbindung mit dem Routing-Subnetz verbunden ist,
- Mittel zum Herstellen von gesicherten Verbindungen zwischen jedem Knoten, wenn die Verbindung der Station mittels einer drahtgebundenen Verbindung mit dem Netzwerkswitch detektiert wird,
- Mittel zum Verwalten der Knoten des Netzwerks, die mit dem Netzwerkswitch verbunden sind, mit Filterregeln, die auf die Daten angewendet werden, die durch die Knoten empfangen werden.

9. Computerprogrammprodukt, **dadurch gekennzeichnet, dass** es Anweisungen zur Implementierung des Verfahrens nach einem der Ansprüche 1 bis 7 durch einen Knoten bei Ausführung des Programms durch einen Prozessor des Knotens umfasst.

10. Speichermedium, **dadurch gekennzeichnet, dass** ein Computerprogramm darauf gespeichert ist, das Anweisungen zur Implementierung des Verfahrens nach einem der Ansprüche 1 bis 7 durch einen Knoten bei Ausführung des Programms durch einen Prozessor des Knotens umfasst.

## Claims

1. Method for protecting a local area network comprising nodes (Ext1, Ext2, Ext3) allowing an extension of coverage of wireless communication in order to increase the range of the local area network by coordinating a plurality of access points integrated in the nodes, the nodes being interconnected by means of a backhaul subnetwork, each node of the backhaul subnetwork sending to at least one wireless network, called fronthaul network, the method comprising the steps of:
- detecting (E50) a connection of a station (STA6a) by means of a cable connection to a network switch (SW23a) included in the local area network, said network switch being connected to the backhaul subnetwork by a cable connection,
- establishing (E55) secure connections between each node if the connection of the station by means of a cable connection to the network switch is detected,
- managing (E56) the nodes of the network connected to the network switch with filtering rules applied to the data received by the nodes.

2. Method according to claim 1, **characterised in that**, prior to the establishment of secure connections, the method comprises a step of detecting, by a node, information indicating that at least one node of the local area network has the coverage extension functionality.

3. Method according to claim 1 or 2, **characterised in that** the local area network further comprises a gateway allowing access to the internet and **in that**, prior to the establishment of the secure connections, a permanent IP connection is established, the permanent IP connection being different from that used by the gateway.

4. Method according to claim 3, **characterised in that**, if at least two nodes are directly connected to the gateway and the gateway does not implement a master-election mechanism for attributing an IP address, the two nodes send requests for attributing an IP address by inserting in a field predetermined information known to the other nodes, the nodes relaying the requests while suppressing the field information.

5. Method according to any one of claims 1 to 4, **characterised in that** a secure connection is established between each pair of nodes, the nodes in each pair of nodes generating encryption parameters for the secure communication.

6. Method according to any one of claims 1 to 5, **characterised in that** the method furthermore comprises the step of suppressing each loop formed by the creation of a secure connection between two nodes and the connection previously used in the backhaul subnetwork between the two nodes.

7. Method according to any one of claims 3 to 6, **characterised in that** the filtering rules applied to the data received by the nodes are applied for enabling the station connected to the network switch by means of the cable connection to access solely the internet by means of the gateway or to access the whole of the local area network.

8. Device for protecting a local area network comprising nodes allowing an extension of coverage of wireless communication in order to increase the range of the local area network by coordinating a plurality of access points integrated in the nodes, the nodes being interconnected by means of a backhaul subnetwork, each node of the backhaul subnetwork sending to at least one wireless network, called fronthaul network, **characterised in that** the device comprises:
- means for detecting the connection of a station by means of a cable connection to a network switch, said network switch being connected to the backhaul subnetwork by a cable connection,
- means for establishing secure connections between each node if the connection of the station by means of a cable connection to the network switch is detected,
- means for managing the nodes of the network connected to the network switch with filtering rules applied to the data received by the nodes.

9. A computer program product, **characterised in that** it comprises instructions for implementing, by a node, the method according to any one of claims 1 to 7, when said program is executed by a processor of the node.

10. A storage medium, **characterised in that** it stores a computer program comprising instructions for implementing, by a node, the method according to any one of claims 1 to 7, when said program is executed by a processor of the node.
